# EUROPEAN PATENT APPLICATION

(11) **EP 4 303 437 A1**
(43) Date of publication of application: **10.01.2024**
(21) Application number: 22183242.1
(22) Date of filing: 06.07.2022
(51) Int. Cl.: F03D 80/60, F03D 80/80

(54) **SEAL FOR COMPONENTS OF A WIND TURBINE**

(71) Applicant: Siemens Gamesa Renewable Energy A/S, 7330 Brande (DK)
(72) Inventor: Hansen, Holger Kempf, 7361 Ejstrupholm (DK)
(74) Representative: SGRE-Association

(57) **Abstract**

The invention relates to a seal (21) for sealing the connection between a first component (41) and at least one cable (12) and/or pipe (13) connecting the first component (41) to a second component (42) of a wind turbine (1), wherein said first component (41) comprises a first opening (31) for receiving the at least one cable (12) and/or pipe (13). According to the invention, the seal (21) comprises a first sealing means (22) arranged between the first opening (31) and the at least one cable (12) and/or pipe (13) and enclosing the at least one cable (12) and/or pipe (13) in such a way that air exchange between the inner part of the first sealing means (22) and the outer part of the first sealing means (22) is prevented.

## Description

The present invention relates to a seal for sealing the connection between components of a wind turbine. The present invention further relates to a wind turbine comprising said seal.

Wind turbines are increasingly used for the generation of electrical energy. A wind turbine comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor, thereby driving the generator. Hence, the rotational energy of the blades is transferred to the generator, which then converts the mechanical energy into electricity and transfers the electricity to the electrical grid.

Wind turbines are placed at locations providing high wind amounts. Hence, as the weather conditions are often rough at the wind turbine locations, the wind turbines must withstand these rough conditions throughout their lifetime. Particularly during installation, but also during operation, transportation, and storage, the wind turbine is exposed to rain, i.e. water, as well as to dust and dirt, which results in a faster deterioration of the materials. Additionally, for offshore wind turbines, the wind turbines' materials may be affected by a faster rate of corrosion due to the high amount of salt in the air. Due to these reasons, the wind turbines have an increased wear at these locations, increasing the overall costs of the wind turbines due to the need for a regular maintenance.

Connections between components of wind turbines are critical points which can be heavily affected by the weather conditions or by the high humidity or salt in the air. Water and dirt can accumulate in the components or in the connection between the components. This results in corrosion, especially for electrical equipment, and failure or the need to replace the components more often.

At present, the introduction of air containing humidity and salt in components arranged at the wind turbine is prevented by adding different types of sealing techniques to critical points which can be heavily affected by the weather conditions or by the high humidity or salt in the air. These sealing techniques are for example using a robust canopy for the nacelle with concrete sealings to prevent unfiltered air from getting inside the nacelle or using liquified airtight foam at places where air could get inside the structures. However, these solutions are time-consuming to install, not flexible, expensive and contain aerosols, which are harmful for workers working at the installation site.

It is therefore an object of the invention to provide a seal for components of a wind turbine that overcome the problems described above.

This is achieved by a seal according to claim 1 and a wind turbine according to claim 15.

The invention relates to a seal for sealing the connection between a first component and at least one cable and/or pipe connecting the first component to a second component of a wind turbine. The first component comprises a first opening for receiving the at least one cable and/or pipe. The seal comprises a first sealing means arranged between the first opening and the at least one cable and/or pipe and enclosing the at least one cable and/or pipe in such a way that air exchange between the inner part of the first sealing means and the outer part of the first sealing means is prevented.

By sealing the connection between the first component and the second component of the wind turbine in an air-tight manner, the introduction of air containing humidity and salt in the first component and the second component is prevented. This is achieved by enclosing the cables and pipes connecting both components and sealing the connections of the cables and pipes to both the first component and the second component. Thus, the sealing means completely enclose and surround the cables and pipes, preventing an air exchange and protecting the cables and pipes.

According to a preferred embodiment of the invention, the first sealing means is a tarp cover. A tarp cover or a tarpaulin cover is a sheet of flexible, water-resistant and strong material, often cloth such as canvas or polyester coated with polyurethane or made of plastics such as polyethylene. Polyethylene tarp covers are particularly inexpensive and a very water-resistant fabric. The tarp cover can also be made from woven polyethylene and is called polytarp.

The tarp cover protects the contents arranged within it from wind, rain, and sunlight, between others.

According to another preferred embodiment of the invention, the tarp cover is formed as a sleeve. An air-tight sleeve is particularly useful for covering pipes and/or cables, as it adapts to the shape of these connection elements.

According to another preferred embodiment of the invention, the first opening comprises a sealing collar, preferably made of tarp. The sealing collar is disposed at the first opening for sealing the first opening. The sealing collar is thus arranged at the first opening between the edge of the opening and the sealing means for achieving the air-tight seal between the first component and the first sealing means.

According to another preferred embodiment of the invention, the second component comprises a second opening for receiving the at least one cable and/or pipe, wherein the first sealing means is coupled to both the first opening and the second opening in such a way that the part of the at least one cable and/or pipe between the first opening and the second opening is integrally enclosed by the first sealing means. This has the advantage that the connection between the first component and the second component is integrally sealed, which prevents the air exchange between the outer part of the seal and the inner part of the seal.

According to another preferred embodiment of the invention, the second opening comprises a sealing collar, preferably made of tarp. The sealing collar is disposed at the second opening for sealing the second opening. The sealing collar is thus arranged at the second opening between the edge of the opening and the sealing means for achieving the air-tight seal between the second component and the first sealing means.

The seal can comprise a sealing collar at each of the openings of the seal.

According to another preferred embodiment of the invention, the first component is a bedplate. The bedplate is a critical component of a wind turbine prone to corrosion due to the plurality of connections coupled to the bedplate. For example, the bedplate can be coupled to electrical equipment located in the nacelle, such as converters and transformers. The bedplate can also be coupled by means of cooling pipes to the cooler located at the nacelle of the wind turbine and providing the necessary cooling to the electrical components, in particular the generator, in the nacelle. Hence, an air-tight seal between the bedplate and the components connected to the bedplate is particularly useful to prevent corrosion of these components and increase their lifetime.

According to another preferred embodiment of the invention, the second component is an electrical cabinet, preferably storing a transformer or a converter of the wind turbine. An electrical cabinet storing sensitive electrical equipment such as the transformer is usually air-tight, but the connection between the cabinet and other components such as the bedplate is not. Thus, the seal protects the connections as well.

According to another preferred embodiment of the invention, the second component is a cooler of the wind turbine. The cooler can be connected to other components of the wind turbine, such as the bedplate, by means of cooling pipes. Thus, the seal protects these connections.

According to another preferred embodiment of the invention, the seal is arranged inside a canopy of a nacelle of the wind turbine. This is particularly advantageous, as the canopy houses electrical equipment which can be protected from salt, water and dirt by the seal.

According to another preferred embodiment of the invention, the seal further comprises tightening means for tightening the first sealing means to the at least one cable and/or pipe. After installation of the sealing means of the seal to the components of the wind turbine, the sealing means can be tightened using zip ties, ropes or straps. If tarp covers are used, the covers can be tightened as they are flexible materials, allowing to mold them and press them against the cables and pipes.

Depending on the requirements of the seal, the seal can further comprise foam madrassas and/or further sealing material within the sealing member, in particular within the sleeve.

According to another preferred embodiment of the invention, the tarp cover is reinforced with a polymer material or an epoxy material with a supporting fiber reinforcement. This increases the durability of the tarp cover.

According to another preferred embodiment of the invention, the seal is configured for further sealing the connection between the first component and a third component of the wind turbine, wherein said seal further comprises at least one cable and/or pipe connecting the first component and the third component, a third opening arranged at the first component and receiving the at least one cable and/or pipe connecting the first component and the third component, a fourth opening arranged at the third component and receiving the at least one cable and/or pipe connecting the first component and the third component, and a second sealing means arranged between the third opening and the fourth opening and enclosing the at least one cable and/or pipe connecting the first component and the third component in such a way that air exchange between the inner part of the second sealing means and the outer part of the second sealing means is prevented.

According to another preferred embodiment of the invention, the second sealing means is a tarp cover.

According to another preferred embodiment of the invention, the seal is configured for further sealing the connection between the first component and a fourth component of the wind turbine, wherein said seal further comprises at least one cable and/or pipe connecting the first component and the fourth component, a fifth opening arranged at the first component and receiving the at least one cable and/or pipe connecting the first component and the fourth component, a sixth opening arranged at the fourth component and receiving the at least one cable and/or pipe connecting the first component and the fourth component, and a third sealing means arranged between the fifth opening and the sixth opening and enclosing the at least one cable and/or pipe connecting the first component and the fourth component in such a way that air exchange between the inner part of the third sealing means and the outer part of third sealing means is prevented.

According to another preferred embodiment of the invention, the third sealing means is a tarp cover.

Yet another aspect of the invention relates to a wind turbine comprising a seal as described above.

In order to facilitate the understanding of the characteristics of the invention and being an integral part of this specification, some drawing sheets are attached on which fig- ures, with an illustrative but not limiting character, the following is represented:
Figure 1 shows a perspective view of a wind turbine.
Figure 2 shows components housed inside the nacelle and the drive train of the wind turbine.
Figure 3 shows a detailed view of the bedplate and connecting means for connecting the bedplate to other components.
Figure 4 shows a seal for sealing the connection of the bedplate with an electrical cabinet according to one embodiment of the invention.
Figure 5 shows a seal for sealing the connection of the bedplate with a plurality of electrical cabinets according to another embodiment of the invention.
Figure 6 shows a seal for sealing the connection of the bedplate with an electrical cabinet according to another embodiment of the invention.
Figure 7 shows a seal for sealing the connection of the bedplate with a plurality of electrical cabinets according to another embodiment of the invention.
Figure 8 shows the first sealing means as a tarp cover.
Figures 9 and 10 show the sealing collar.

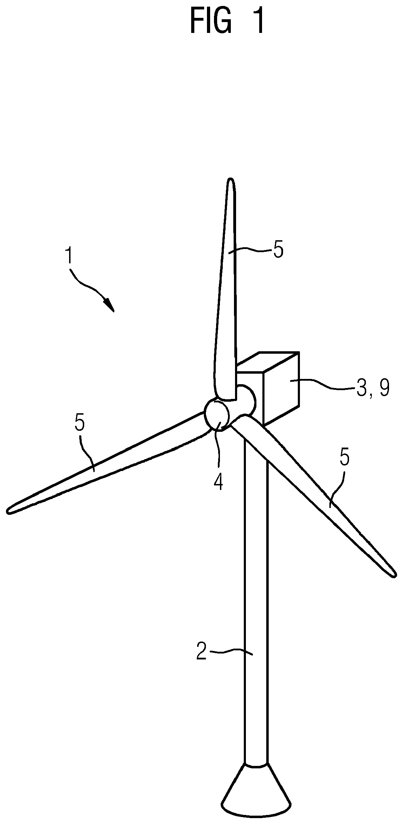

Figure 1 shows a wind turbine 1. The wind turbine 40 comprises a hub 4 connected to a generator 6 (not shown) arranged inside a nacelle 3. The hub 4 comprises three wind turbine blades 5. The nacelle 3 is arranged at an upper end of a tower 2. The nacelle 3 comprises a canopy 9 housing electrical equipment and other components inside the nacelle 3 and providing the necessary structural support.

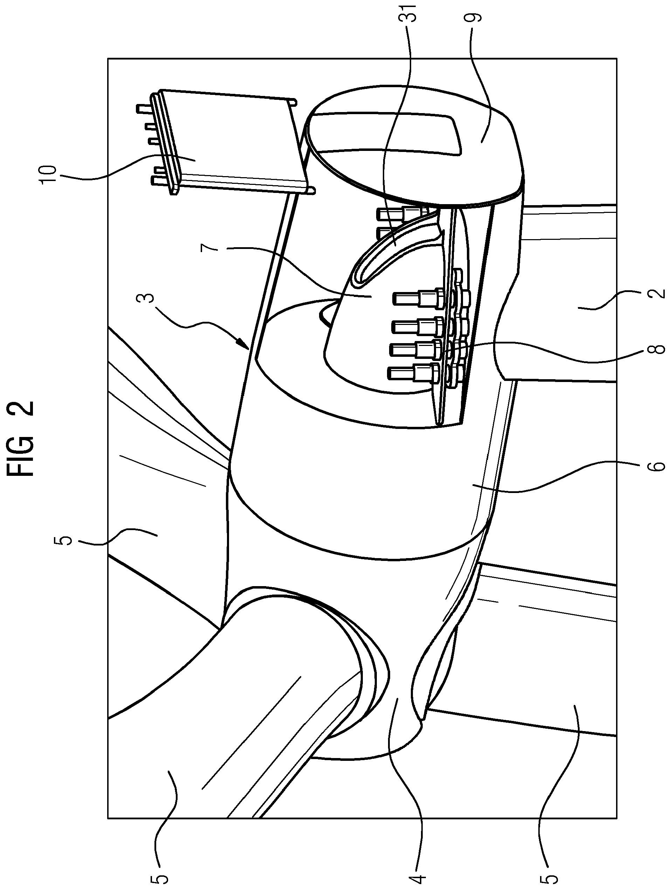

Figure 2 shows components housed inside the nacelle 3 and the drive train of the wind turbine 1. There are two main types of wind turbines 1, the ones with a gearbox and direct drive gearless wind turbines. Here, a direct drive gearless wind turbines is shown, but drive trains with a gearbox are also suitable for the invention. Thus, the generator 6 is directly coupled to the hub 4, which is itself connected to the blades 5.

The canopy 9 shown in this figure is coupled to the tower 2 by means of a yaw system 8 for allowing the rotation, i.e., the yawing, of the nacelle 3 about the axis of the tower 2.

The canopy 7 houses a bedplate 7 comprising a first opening 31 allowing the connection of the bedplate 7 with electrical equipment such as transformers or converters or with the cooler 10, arranged on top of the nacelle 3.

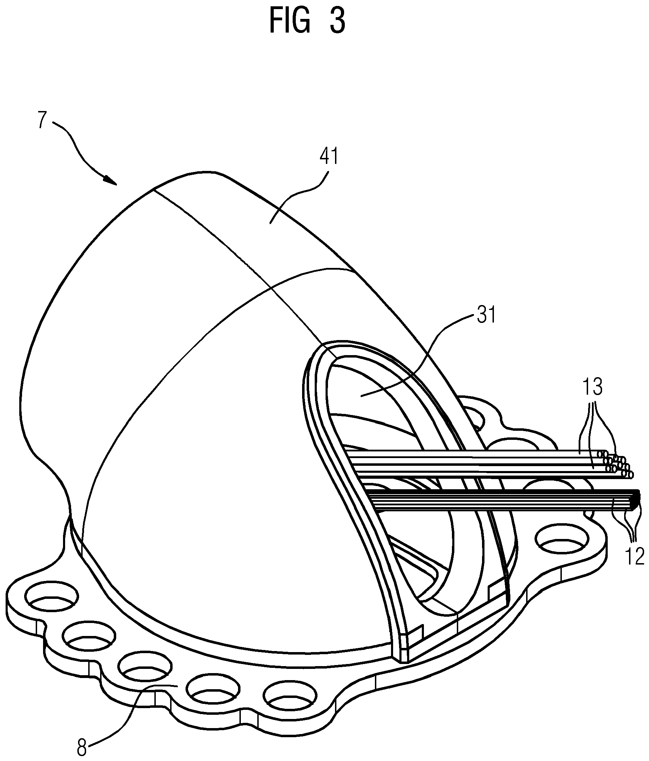

Figure 3 shows a detailed view of the bedplate 7 and connecting means for connecting the bedplate 7 to other components. In this case, the bedplate 7 is the first component 41 of the seal 21, which further comprises cables 12 and pipes 13 to enable the connection of the first component 41 with any further component 42, 43, 44, such as with the transformer, converter or cooler.

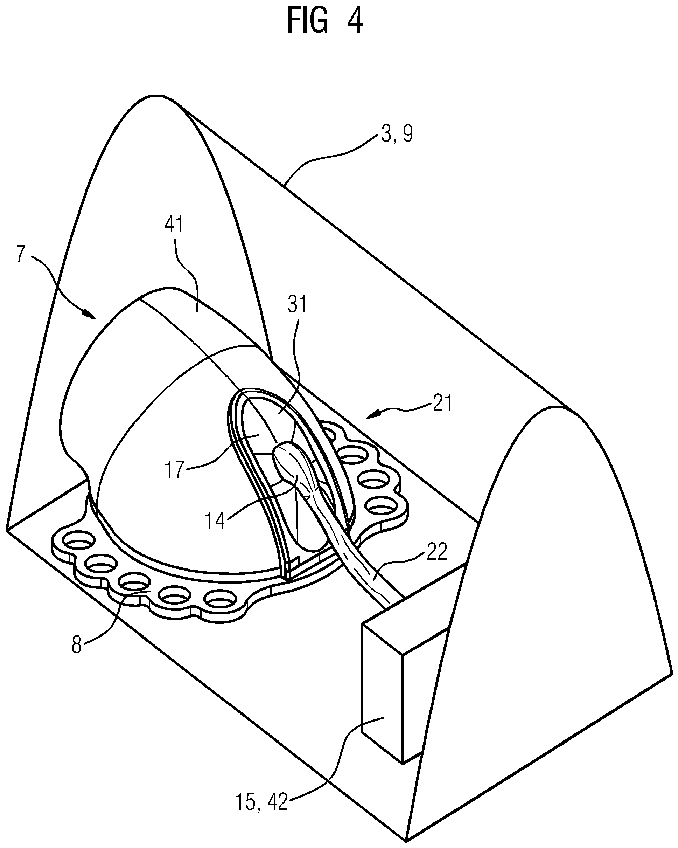

Figure 4 shows a seal 21 for sealing the connection of the bedplate 7 with an electrical cabinet 15.

The seal 21 shown in the Figure is arranged inside a canopy 9 of a nacelle 3 of the wind turbine 1 and suitable for sealing the connection between the first component 41, which is the bedplate 7, and the second component 42 of a wind turbine 1, which is in this case an electrical cabinet 15 for storing electrical equipment, such as a transformer or a converter. The seal 21 comprises cables 12 and pipes 13, which cannot be seen as they are enclosed by the first sealing means 22 arranged between a first opening 31 arranged at the first component 41 and a second opening 32 arranged at the second component 42.

The first sealing means 22 is a tarp cover 14 formed as a sleeve, which prevents air exchange between the inner part of the first sealing means 22 and the outer part of the first sealing means 22.

The first opening 31 comprises a sealing collar 17 made of tarp for sealing the first opening 31.

As shown in this Figure, the first sealing means 22 is coupled to both the first opening 31 and the second opening 32 in such a way that the part of the at least one cable 12 and/or pipe 13 between the first opening 31 and the second opening 32 is integrally enclosed by the first sealing means 22.

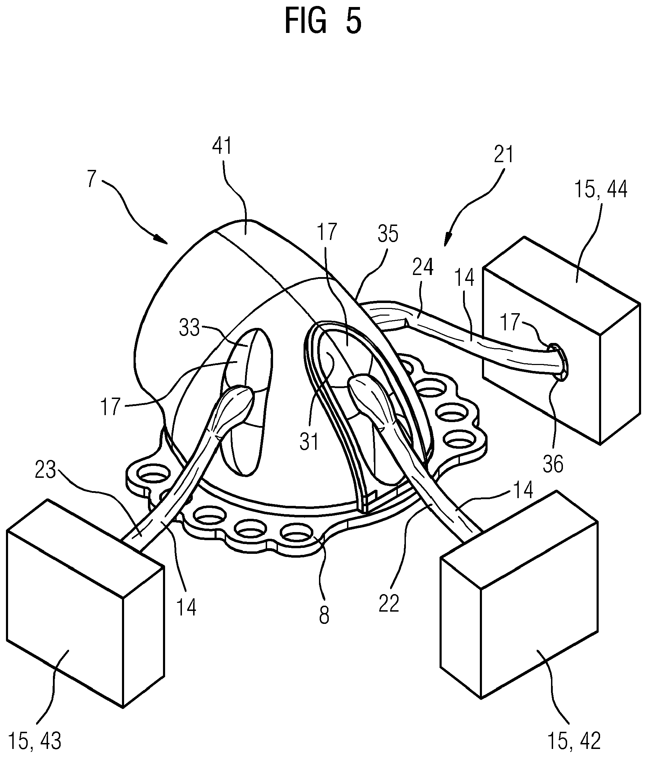

Figure 5 shows a seal 21 for sealing the connection of the bedplate 7 with a plurality of electrical cabinets 15.

In addition to the connections shown in Figure 4, the seal 21 is configured for further sealing the connection between the first component 41 and a third component 43 of the wind turbine 1 and between the first component 41 and a fourth component 44 of the wind turbine 1.

The seal 21 further comprises a third opening 33 arranged at the first component 41 and receiving the at least one cable 12 and/or pipe 13 connecting the first component 41 and the third component 43, a fourth opening 34 arranged at the third component 43 and receiving the at least one cable 12 and/or pipe 13 connecting the first component 41 and the third component 43 and a second sealing means 23, which is a tarp cover 14 arranged between the third opening 33 and the fourth opening 34 and enclosing the at least one cable 12 and/or pipe 13 connecting the first component 41 and the third component 43.

The seal 21 further comprises a fifth opening 35 arranged at the first component 41 and receiving the at least one cable 12 and/or pipe 13 connecting the first component 41 and the fourth component 44, a sixth opening 36 arranged at the fourth component 44 and receiving the at least one cable 12 and/or pipe 13 connecting the first component 41 and the fourth component 44 and a third sealing means 24, which is a tarp cover 14 arranged between the fifth opening 35 and the sixth opening 36 and enclosing the at least one cable 12 and/or pipe 13 connecting the first component 41 and the fourth component 44.

As shown in this Figure, the first sealing means 22 is coupled to both the first opening 31 and the second opening 32 in such a way that the part of the at least one cable 12 and/or pipe 13 between the first opening 31 and the second opening 32 is integrally enclosed by the first sealing means 22.

In addition, the second sealing means 23 is coupled to both the third opening 33 and the fourth opening 34 in such a way that the part of the at least one cable 12 and/or pipe 13 between the third opening 33 and the fourth opening 34 is integrally enclosed by the second sealing means 23.

In addition, the third sealing means 24 is coupled to both the fifth opening 35 and the sixth opening 36 in such a way that the part of the at least one cable 12 and/or pipe 13 between the fifth opening 35 and the sixth opening 36 is integrally enclosed by the third sealing means 24.

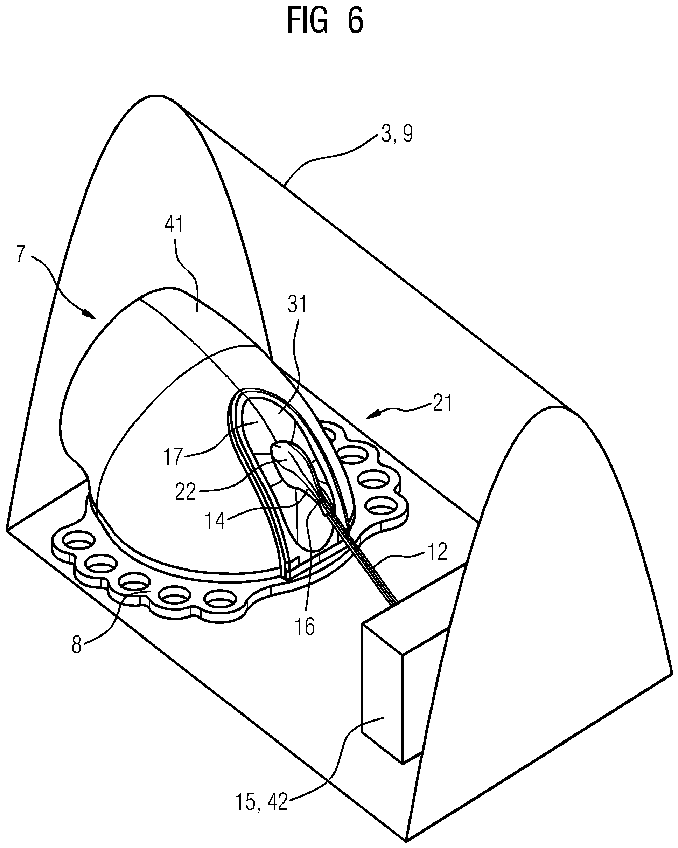

Figure 6 shows a seal 21 similar to the one shown in Figure 4, but where the first sealing means 22 seals the connection between the first component 41 and a bundle of cables 12 connecting the first component 41 to a second component 42 of a wind turbine 1. The difference between both figures is that in Figure 6, the first sealing means 22 is not coupled to the second component 42, but only to the first opening 31 and to the bundle of cables 12 connecting the first component 41 to the second component 42. The first sealing means 22 is a tarp cover 14 tightened by tightening means 16 to press the tarp cover 14 against the cables 12.

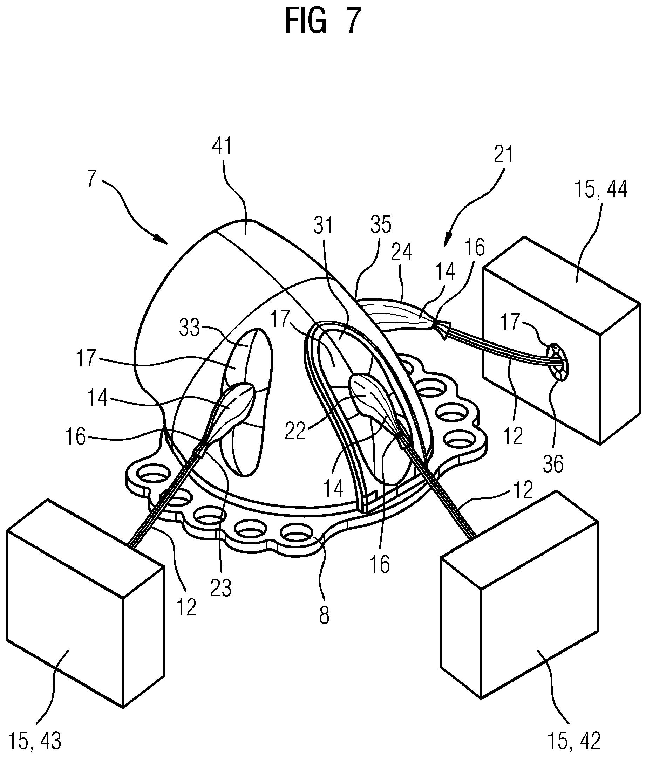

Figure 7 shows a seal 21 similar to the one shown in Figure 5, but where the first sealing means 22 seals the connection between the first component 41 and a bundle of cables 12 connecting the first component 41 to a second component 42 of a wind turbine 1. In addition, the second sealing means 23 seals the connection between the first component 41 and a bundle of cables 12 connecting the first component 41 to a third component 43 of a wind turbine 1. In addition, the third sealing means 24 seals the connection between the first component 41 and a bundle of cables 12 connecting the first component 41 to a fourth component 44 of a wind turbine 1. The difference between both figures is that in Figure 7, each sealing means 22, 23, 24 is only coupled to the first opening 31 and to the bundle of cables 12 connecting the first component 41 to the second component 42, the third component 43 and the fourth component 44, respectively. The sealing means 22 are tarp covers 14 tightened by tightening means 16 to press the tarp covers 14 against the cables 12.

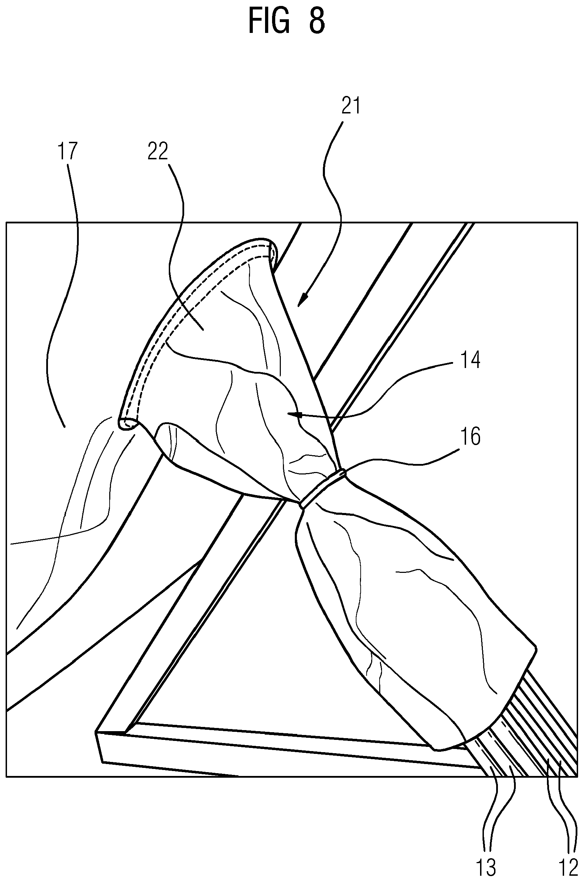

Figure 8 shows the first sealing means 22 as a tarp cover 14 protecting a bundle of cables 12 and pipes 13. The tarp cover 14 is formed as a sleeve and comprises tightening means 16 which are cable binders for tightening the first sealing means 22.

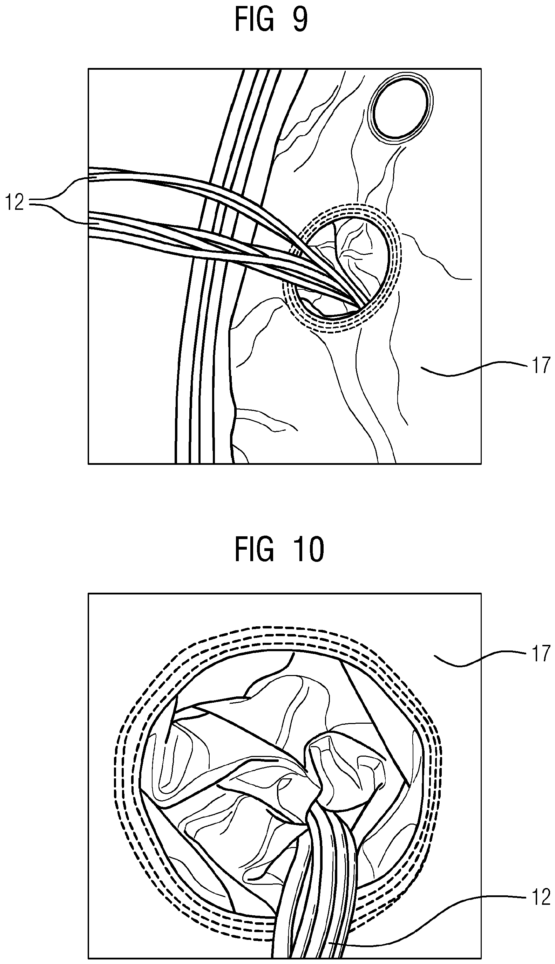

Figures 9 and 10 show the sealing collar 17 at its installation state, which comprises openings for the cables 12 and pipes 13 to pass through.

### Reference numbers

- 1: Wind turbine
- 2: Tower
- 3: Nacelle
- 4: Hub
- 5: Blade
- 6: Generator
- 7: Bedplate
- 8: Yaw bearing
- 9: Canopy
- 10: Cooler

- 12: Cable
- 13: Pipe
- 14: Tarp cover
- 15: Electrical cabinet
- 16: Tightening means
- 17: Sealing collar

- 21: Seal
- 22: First sealing means
- 23: Second sealing means
- 24: Third sealing means

- 31: First opening
- 32: Second opening
- 33: Third opening
- 34: Fourth opening
- 35: Fifth opening
- 36: Sixth opening

- 41: First component
- 42: Second component
- 43: Third component
- 44: Fourth component

## Claims

1. A seal (21) for sealing the connection between a first component (41) and at least one cable (12) and/or pipe (13) connecting the first component (41) to a second component (42) of a wind turbine (1), wherein said first component (41) comprises a first opening (31) for receiving the at least one cable (12) and/or pipe (13), wherein said seal (21) comprises a first sealing means (22) arranged between the first opening (31) and the at least one cable (12) and/or pipe (13) and enclosing the at least one cable (12) and/or pipe (13) in such a way that air exchange between the inner part of the first sealing means (22) and the outer part of the first sealing means (22) is prevented.

2. The seal (21) according to claim 1, wherein the first opening (31) comprises a sealing collar (17), preferably made of tarp, for sealing the first opening (31).

3. The seal (21) according to claim 1 or 2, wherein the second component (42) comprises a second opening (32) for receiving the at least one cable (12) and/or pipe (13), wherein the first sealing means (22) is coupled to both the first opening (31) and the second opening (32) in such a way that the part of the at least one cable (12) and/or pipe (13) between the first opening (31) and the second opening (32) is integrally enclosed by the first sealing means (22).

4. The seal (21) according to claim 3, wherein the second opening (32) comprises a sealing collar (17), preferably made of tarp, for sealing the second opening (32).

5. The seal (21) according to any of the preceding claims, wherein the first sealing means (22) is a tarp cover (14).

6. The seal (21) according to any of the preceding claims, wherein the tarp cover (14) is formed as a sleeve.

7. The seal (21) according to any of the preceding claims, wherein the first component (41) is a bedplate (7).

8. The seal (21) according to any of the preceding claims, wherein the second component (42) is an electrical cabinet (15), preferably storing a transformer or a converter of the wind turbine (1).

9. The seal (21) according to any of the preceding claims, wherein the second component (42) is a cooler (10) of the wind turbine (1).

10. The seal (21) according to any of the preceding claims, wherein said seal (21) is arranged inside a canopy (9) of a nacelle (3) of the wind turbine (1).

11. The seal (21) according to any of the preceding claims, wherein said seal (21) further comprises tightening means (16) for tightening the first sealing means (22) to the at least one cable (12) and/or pipe (13).

12. The seal (21) according to any of the preceding claims, wherein said seal (21) is configured for further sealing the connection between the first component (41) and a third component (43) of the wind turbine (1), wherein said seal (21) further comprises at least one cable (12) and/or pipe (13) connecting the first component (41) and the third component (43),
a third opening (33) arranged at the first component (41) and receiving the at least one cable (12) and/or pipe (13) connecting the first component (41) and the third component (43),
a fourth opening (34) arranged at the third component (43) and receiving the at least one cable (12) and/or pipe (13) connecting the first component (41) and the third component (43), and
a second sealing means (23) arranged between the third opening (33) and the fourth opening (34) and enclosing the at least one cable (12) and/or pipe (13) connecting the first component (41) and the third component (43) in such a way that air exchange between the inner part of the second sealing means (23) and the outer part of the second sealing means (23) is prevented.

13. The seal (21) according to claim 12, wherein the second sealing means (23) is a tarp cover (14).

14. The seal (21) according to any of the preceding claims, wherein said seal (21) is configured for further sealing the connection between the first component (41) and a fourth component (44) of the wind turbine (1), wherein said seal (21) further comprises at least one cable (12) and/or pipe (13) connecting the first component (41) and the fourth component (44),
a fifth opening (35) arranged at the first component (41) and receiving the at least one cable (12) and/or pipe (13) connecting the first component (41) and the fourth component (44),
a sixth opening (36) arranged at the fourth component (44) and receiving the at least one cable (12) and/or pipe (13) connecting the first component (41) and the fourth component (44), and
a third sealing means (24), preferably a tarp cover (14), arranged between the fifth opening (35) and the sixth opening (36) and enclosing the at least one cable (12) and/or pipe (13) connecting the first component (41) and the fourth component (44) in such a way that air exchange between the inner part of the third sealing means (24) and the outer part of third sealing means (24) is prevented.

15. Wind turbine (1) comprising a seal (21) according to any of the preceding claims.
